# EUROPÄISCHE PATENTSCHRIFT

(11) **EP 0 921 018 B1**
(45) Veröffentlichungstag und Bekanntmachung des Hinweises auf die Patenterteilung: **16.02.2005**
(21) Anmeldenummer: 97121489.5
(22) Anmeldetag: 06.12.1997
(51) Int. Cl.: B60B 27/00

(54) **Radaufhängung**
Wheel suspension
Suspension de roue

(43) Veröffentlichungstag der Anmeldung: 09.06.1999
(73) Patentinhaber: Iprotec Maschinen- und Edelstahlprodukte GmbH, 32469 Petershagen-Friedewalde (DE)
(72) Erfinder:
(74) Vertreter: Bauer, Wulf, Dr.

(56) Entgegenhaltungen:
- EP-A- 0 126 607
- EP-A- 0 653 315
- WO-A-92/11474
- GB-A- 168 142
- US-A- 4 340 317

## Beschreibung

Die Erfindung betrifft eine Radaufhängung für die angetriebenen Räder eines Kraftfahrzeuges, die jeweils durch Radschrauben an einer Anlagefläche eines Bremskörpers, nämlich einer Bremstrommel oder einer Bremsscheibe lösbar befestigt sind, der seinerseits durch mindestens ein Wälzlager drehbar an einer verschwenkbar mit dem Fahrzeugrahmen oder Fahrzeugaufbau verbundenen Aufhängung gelagert und mit einer Antriebswelle verbunden ist.

Die gattungsgemäße EP 0 653 315A zeigt eine solche Radaufhängung.

Derartige Radaufhängungen für die angetriebenen Räder eines Kraftfahrzeuges sind in verschiedenen Ausführungen bekannt. Bei der Verwendung eines aus Kugelschale, Kugelstern und in einem Kugelkäfig angeordneten Kugeln bestehenden Gleichlaufgelenkes für Einzelradaufhängungen ist die Kugelschale bei den bekannten Konstruktionen mit einem an ihrem Boden einstückig angeformten Zapfen versehen, der als Radantriebswelle dient und drehfest mit einer Nabe verbunden ist, die über mindestens ein Wälzlager drehbar an einem verschwenkbar mit dem Fahrzeugrahmen oder dem Fahrzeugaufbau verbundenen Lenker gelagert ist. Die drehfeste Verbindung zwischen der Nabe und dem am Boden der Kugelschale angeformten Zapfen erfolgt durch eine axiale Kerbverzahnung. Außer hohen Herstellungskosten hat diese sowohl in der Nabe als auch am Zapfen der Kugelschale auszubildende Kerbverzahnung den Nachteil, daß sie in radialer Richtung keine absolut spielfreie Verbindung zwischen den beiden unverdrehbar miteinander verbundenen Teilen ermöglicht. Selbst ein geringes radiales Spiel im Bereich der axialen Kerbverzahnung führt jedoch im Hinblick auf die sehr hohe, auch dynamische Belastung an dieser das Antriebsdrehmoment übertragenden Stelle zu einem unerwünschten Verschleiß sowie unerwünschten Geräuschen und Schwingungen.

Der Erfindung liegt die **Aufgabe** zugrunde, eine Radaufhängung der voranstehend beschriebenen Art für die angetriebenen Räder eines Kraftfahrzeuges zu schaffen, die bei gleichzeitig vereinfachtem Aufbau eine auch in radialer Richtung absolut spielfreie Verbindung zwischen der Antriebswelle und dem am Bremskörper befestigten Rad schafft, und zwar unabhängig davon, ob es sich beim Bremskörper um eine Bremstrommel oder eine Bremsscheibe und beim angetriebenen Rad um ein ungelenktes Hinterrad oder lenkbares Vorderrad handelt.

Die **Lösung** dieser Aufgabenstellung durch die Erfindung ist dadurch gekennzeichnet, daß das radseitige Ende der Antriebswelle über einen Wellenabschnitt mit polygonaler Außenkontur unmittelbar mit dem Bremskörper verbunden ist und daß die Antriebswelle im Anschluß an diesen polygonalen Wellenabschnitt mit einem als Sitz für das Wälzlager dienenden zylindrischen Wellenabschnitt ausgebildet ist.

Durch diese erfindungsgemäße Weiterbildung der eingangs definierten Radaufhängung entfällt die bisher benötigte Nabe und deren drehfeste Verbindung mit der Radantriebswelle über eine axiale Kerbverzahnung, die keine eindeutige und absolut spielfreie Zuordnung in radialer Richtung ermöglicht. Das radseitige Ende der Antriebswelle wird über den Wellenabschnitt mit polygonaler Außenkontur unmittelbar mit dem Bremskörper verbunden, wobei dieser polygonale Wellenabschnitt in eine entsprechend polygonale Aussparung des Bremskörpers unter Vermeidung jeglichen radialen Spiels eingreift. Da die Antriebswelle weiterhin im Anschluß an den polygonalen Wellenabschnitt an ihrem radseitigen Ende mit einem als Sitz für den Innenring des Wälzlagers dienenden zylindrischen Wellenabschnitt ausgeführt ist, entfällt die bisher verwendete Radnabe, deren Funktion teilweise durch den Bremskörper und teilweise durch die Antriebswelle übernommen wird. Insgesamt ergibt sich somit eine konstruktiv einfachere, weniger Bauteile umfassende Radaufhängung, die wegen des Wegfalls eines bisher unvermeidbaren radialen Spiels an der Abtriebsseite zudem eine erheblich höhere Lebensdauer hat.

Gemäß einer bevorzugten praktischen Ausführungsform der Erfindung findet diese Radaufhängung bei Einzelradaufhängungen Verwendung, bei denen der Bremskörper mittels eines aus Kugelschale, Kugelstern und in einem Kugelkäfig angeordneten Kugeln bestehenden Gleichlaufgelenk mit der Antriebswelle verbunden ist. Bei diesen Radaufhängungen wird vorgeschlagen, daß das radseitige, als Radantriebswelle ausgebildete Ende der Kugelschale über einen Wellenabschnitt mit polygonaler Außenkontur unmittelbar mit dem Bremskörper verbunden ist. Der als Sitz für das Wälzlager dienende zylindrische Wellenabschnitt ist bei dieser Ausführungsform zwischen dem polygonalen Wellenabschnitt und der Kugelschale ausgebildet. Auch bei dieser Ausführungsform liegt der Vorteil im Wegfall der Radnabe sowie des radialen Spiels im Bereich Bremskörper/Antriebswelle.

Gemäß einem weiteren Merkmal der Erfindung kann die Radantriebswelle als separates Bauteil ausgeführt und über einen Endflansch mit polygonaler Außenkontur mit der Kugelschale verbunden sein, die in ihrem Boden mit einer der polygonalen Außenkontur des Endflansches entsprechenden Ausnehmung versehen ist. Durch diese Ausbildung der Radantriebswelle als separates Bauteil und durch die spielfreie Verbindung dieses Bauteils mit der Kugelschale ergibt sich die Möglichkeit einer weiteren Kostensenkung bei der Herstellung der erfindungsgemäßen Einzelradaufhängung.

Bei einer bevorzugten Ausführungsform der Erfindung ist die polygonale Außenkontur des Wellenabschnitts und/oder des Endflansches der Radantriebswelle in axialer Richtung konisch ausgebildet, so daß sich auf einfache Weise eine sowohl in axialer als auch in radialer Richtung spielfreie Verbindung der Radantriebswelle einerseits mit dem Bremskörper und andererseits mit der Kugelschale erzielen läßt.

Gemäß einem weiteren Merkmal der Erfindung ist die Antriebswelle bzw. die Radantriebswelle mit einem Gewinde für ein den Bremskörper auf der Antriebswelle bzw. der Radantriebswelle in axialer Richtung festlegendes Befestigungselement versehen, wobei das Gewinde vorzugsweise als Innengewinde für den Gewindebolzen des als Schraube ausgebildeten Befestigungselements ausgebildet ist, deren Schraubenkopf an einer ringförmigen Anlagefläche des Bremskörpers anliegt. Hierdurch ergibt sich eine sehr einfache Konstruktion für die spielfreie und drehfeste Verbindung des Bremskörpers über die Radantriebswelle mit der Kugelschale, die erfindungsgemäß dadurch weitergebildet werden kann, daß durch das Befestigungselement zugleich der Innenring des Wälzlagers zwischen dem Endflansch der Antriebswelle bzw. der Radantriebswelle und einer Anlagefläche am Bremskörper eingespannt wird.

Um die Schraube zugleich als Werkzeug für die Montage und Demontage des Bremskörpers auf der Antriebswelle bzw. der Radantriebswelle heranzuziehen, wird mit einem weiteren Merkmal der Erfindung vorgeschlagen, den Schraubenkopf mit einer innenliegenden Schlüsselfläche, insbesondere einem Innensechskant, zu versehen und mittels eines Halteelements, beispielsweise eines Sprengringes, drehbar, jedoch axial im wesentlichen unverschiebbar im Bremskörper zu halten. Mit Hilfe einer derart am Bremskörper gehalterten Schraube kann der Bremskörper und mit ihm das Wälzlager nicht nur auf die Antriebswelle aufgeschoben, sondern der Bremskörper auch von der Antriebswelle abgezogen werden, ohne daß hierfür ein Spezialwerkzeug erforderlich ist.

Die erfindungsgemäße Radaufhängung eignet sich nicht nur für die angetriebenen Hinterräder eines Kraftfahrzeuges, sondern auch für die lenkbaren Vorderräder eines mit Vorderradantrieb ausgestatteten Kraftfahrzeuges. Im letztgenannten Fall ist sowohl die Kugelschale als auch der Kugetstern des Gleichlaufgelenkes mit gewölbten Kugellaufbahnen für die Kugeln ausgebildet und der Außenring des Wälzlagers in einem Achsschenkel festgelegt, der seinerseits durch eine Lenkung verschwenkbar an einem Lenker gelagert ist.

Unabhängig davon, ob es sich bei der erfindungsgemäßen Radaufhängung um eine Aufhängung für ein angetriebenes Hinterrad oder ein angetriebenes, gelenktes Vorderrad handelt, kann der Bremskörper als Bremsscheibe oder als Bremstrommel ausgebildet sein.

Auf der Zeichnung ist ein Ausführungsbeispiel der erfindungsgemäßen Radaufhängung dargestellt, und zwar zeigen:
- Fig. 1: einen Längsschnitt durch eine mit dem Bremskörper und der Kugelschale eines Gleichlaufgelenkes drehfest verbundene Radantriebswelle,
- Fig. 2: einen Querschnitt gemäß der Schnittlinie II-II in Fig. 1 und
- Fig. 3: einen Querschnitt gemäß der Schnittlinie III-III in Fig. 1.

Das dargestellte Ausführungsbeispiel ist auf eine mit einem Gleichlaufgelenk versehene Einzelradaufhängung beschränkt, obwohl die dargestellte Art der Radaufhängung für alle Radaufhängungen angetriebener Räder verwendbar ist.

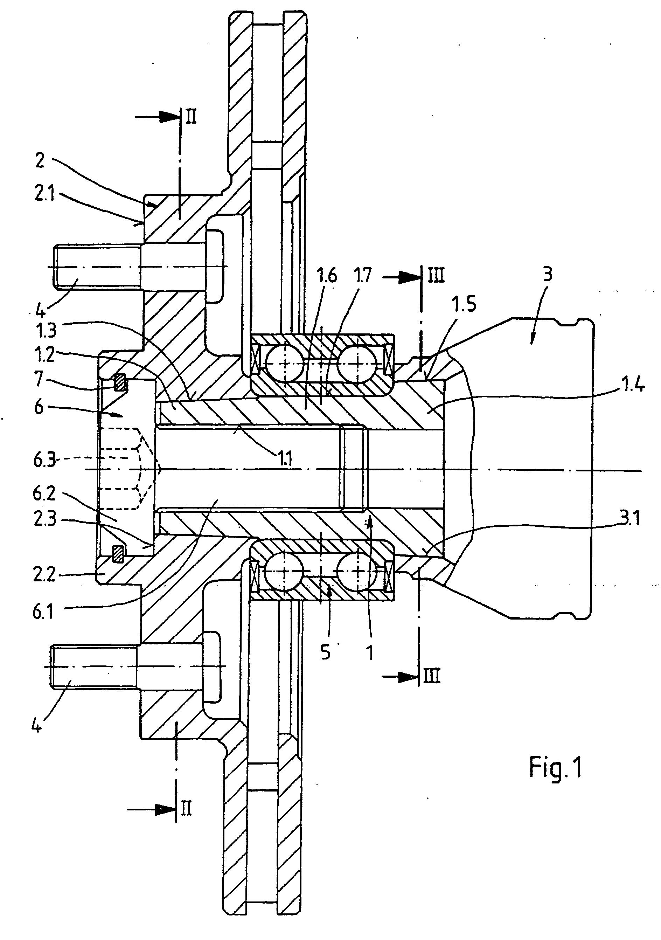

Von dieser Einzelradaufhängung für ein angetriebenes Rad eines Kraftfahrzeuges sind beim Ausführungsbeispiel nach den Fig. 1 bis 3 lediglich die relevanten Teile dargestellt, nämlich eine Radantriebswelle 1, die an ihrem radseitigen Ende verdrehfest mit einem beim Ausführungsbeispiel als Bremsscheibe 2 ausgebildeten Bremskörper und an ihrem anderen Ende wiederum verdrehfest mit einer Kugelschale 3 eines im übrigen nicht dargestellten Gleichlaufgelenkes verbunden ist. Dieses Gleichlaufgelenk umfaßt außer der dargestellten Kugelschale 3 einen verdrehfest auf einer Antriebswelle angeordneten Kugelstern, der über in einem Kugelkäfig angeordnete Kugeln unverdrehbar mit der Kugelschale 3 zusammenwirkt, wobei die Kugeln einerseits in der Kugelschale 3 und andererseits am Kugelstern entweder auf geraden oder auf gewölbten Kugelbahnen laufen, je nachdem ob es sich um ein Gleichlaufgelenk mit axialer Verschiebemöglichkeit oder um ein Gleichlauf-Festgelenk handelt. Derartige Gleichlaufgelenke werden sowohl für die ungelenkten Hinterräder als auch für die gelenkten Vorderräder von Kraftfahrzeugen eingesetzt.

Das von der nicht dargestellten Antriebswelle auf die Kugelschale 3 übertragene Antriebsmoment wird über die Radantriebswelle 1 an ein Rad weitergeleitet, das mittels Radschrauben 4 lösbar an einer Anlagefläche 2.1 der Bremsscheibe 2 befestigt werden kann. Das auf der Zeichnung nicht dargestellte Rad wird durch in eine in seiner Radschüssel ausgebildete Mittelbohrung durch einen Zentrierflansch 2.2 an der Bremsscheibe 2 zentriert. Beim dargestellten Ausführungsbeispiel handelt es sich um eine belüftete Bremsscheibe 2.

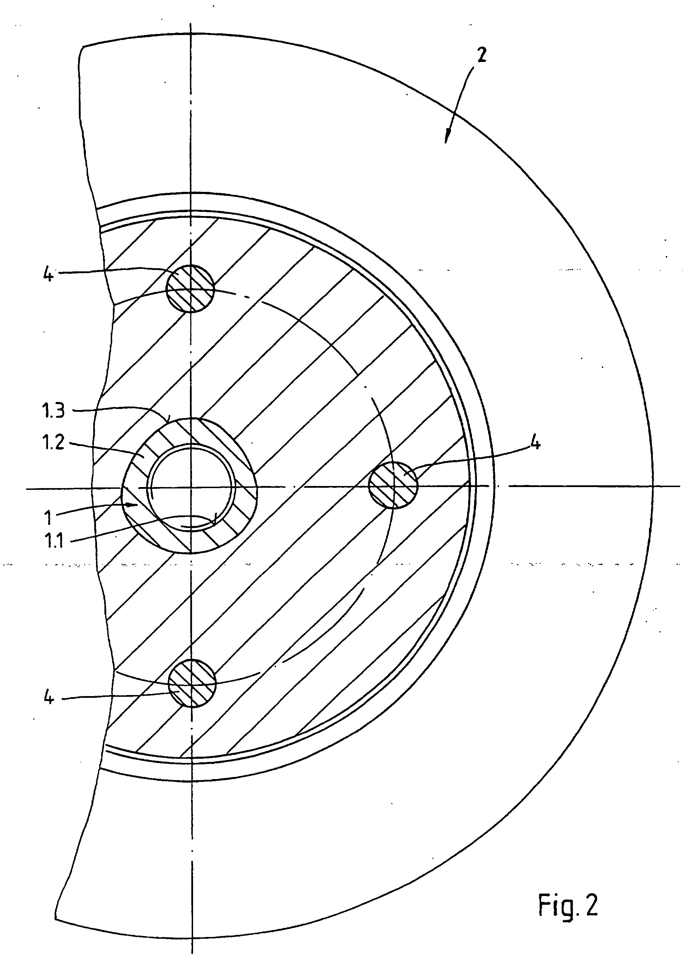

Die Radantriebswelle 1, die das Antriebsmoment von der Kugelschale 3 auf die Bremsscheibe 2 überträgt, ist beim Ausführungsbeispiel als separates Bauteil dargestellt, sie kann aber auch einstückig mit der Kugelschale 3 ausgeführt sein. Am radseitigen Ende ist die Radantriebswelle 1 mit einem Wellenabschnitt 1.2 mit polygonaler Außenkontur 1.3 ausgebildet. Diese polygonale Außenkontur 1.3 des Wellenabschnittes 1.2 ist am besten im Querschnitt der Fig. 2 zu erkennen. Die Bremsscheibe 2 ist mit einer entsprechenden polygonalen Ausnehmung versehen, so daß sich im zusammengebauten Zustand gemäß Fig. 1 eine drehfeste, momentübertragende Verbindung zwischen der Radantriebswelle 1 und der Bremsscheibe 2 ergibt. Anstelle des in Fig. 2 dargestellten, an ein gerundetes gleichseitiges Dreieck erinnernden Polygons kann jeder andere polygonale Konturverlauf gewählt werden.

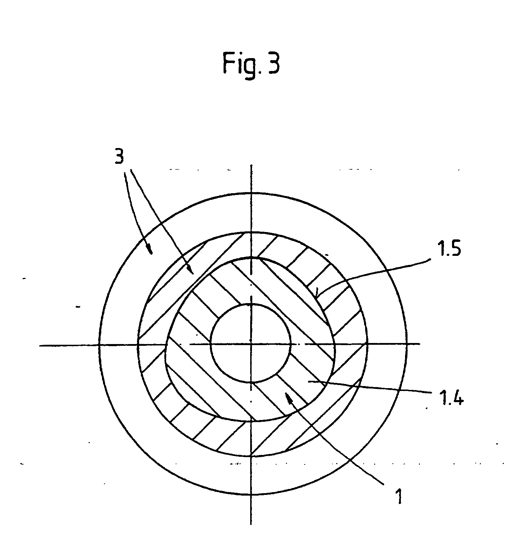

Auch die verdrehfeste Verbindung zwischen der Kugelschale 3 und dem antriebsseitigen Ende der Radantriebswelle 1 erfolgt über eine polygonale Außenkontur 1.5, die auf der Mantelfläche eines Endflansches 1.4 ausgebildet ist. Diese in Fig. 3 erkennbare polygonale Außenkontur 1.5 des Endflansches 1.4 der Radantriebswelle 1 korrespondiert mit einer entsprechenden polygonalen Ausnehmung 3.1 im Boden der Kugelschale 3, so daß sich auch an dieser Stelle eine unverdrehbare Verbindung zwischen Radantriebswelle 1 und Kugelschale 3 ergibt.

Wie das Ausführungsbeispiel erkennen läßt, sind die polygonale Außenkontur 1.3 des Wellenabschnittes 1.2 und die polygonale Außenkontur 1.5 des Endflansches 1.4 in axialer Richtung leicht konisch ausgebildet, so daß sich durch Aufbringen einer Axialkraft eine sowohl in axialer als auch in radialer Richtung spielfreie Verbindung zwischen der Radantriebswelle 1 einerseits und der Bremsscheibe 2 bzw. der Kugelschale 3 andererseits auf einfache Weise erzielen läßt.

Zwischen dem Endflansch 1.4 und dem Wellenabschnitt 1.2 der Radantriebswelle ist ein Wellenabschnitt 1.6 mit zylindrischer Mantelfläche 1.7 ausgebildet, der als Sitz für den Innenring eines Wälzlagers 5 dient, das beim Ausführungsbeispiel als Doppelkugellager dargestellt ist. Der Innenring dieses Wälzlagers 5 liegt zwischen dem Endflansch 1.4 der Radantriebswelle 1 und einer Anlagefläche an der Bremsscheibe 2 an. Über den Außenring dieses Wälzlagers 5 ist die Radantriebswelle 1 und damit die Bremsscheibe 2 drehbar an einem nicht dargestellten Lenker gelagert, der verschwenkbar mit dem Fahrzeugrahmen oder dem Fahrzeugaufbau des Kraftfahrzeuges verbunden ist. Sofern es sich bei der Einzelradaufhängung um die Aufhängung eines gelenkten Vorderrades handelt, befindet sich der Außenring des Wälzlagers 5 in einem Achsschenkel, der seinerseits um eine Schwenkachse schwenkbar an einem Lenker des Kraftfahrzeuges gelagert ist.

Um die Lage der in Fig. 1 dargestellten Teile sicherzustellen, ist die Radantriebswelle 1 mit einem Innengewinde 1.1 versehen, in das der Gewindebolzen 6.1 einer Schraube 6 eingreift, deren Schraubenkopf 6.2 an einer ringförmigen Anlagefläche 2.3 anliegt, die gemäß Fig. 1 innerhalb des Zentrierflansches 2.2 an der Bremsscheibe 2 ausgebildet ist. Die Fig. 1 läßt weiterhin erkennen, daß der Schraubenkopf 6.2 beim Ausführungsbeispiel mit einer als Innensechskant 6.3 ausgebildeten Schlüsselfläche versehen und mittels eines als Sprengring 7 ausgebildeten Halteelementes drehbar, jedoch axial im wesentlichen unverschiebbar in der Bremsscheibe 2 gehalten ist.

Durch diese Ausbildung besteht die Möglichkeit, die Bremsscheibe 2 ggf. zusammen mit dem Wälzlager 5 allein mit Hilfe der Schraube 3 auf die Radantriebswelle 1 aufzuziehen und hierbei gleichzeitig die in axialer und radialer Richtung spielfreie Verbindung zwischen der Radantriebswelle 1 einerseits und der Bremsscheibe 2 sowie der Kugelschale 3 andererseits herzustellen. Auch ein Abziehen der Bremsscheibe 2 von der Radantriebswelle 1 ist allein mit Hilfe der Schraube 6 möglich, da diese bei einem Herausdrehen aus dem Innengewinde 1.1 der Radantriebswelle 1 über den Sprengring 7 die Bremsscheibe 2 mitnimmt.

### Bezugszeichenliste

- 1: Radantriebswelle
- 1.1: Innengewinde
- 1.2: Wellenabschnitt
- 1.3: polygonale Außenkontur
- 1.4: Endflansch
- 1.5: polygonale Außenkontur
- 1.6: Wellenabschnitt
- 1.7: zylindrische Mantelfläche
- 2: Bremsscheibe
- 2.1: Anlagefläche
- 2.2: Zentrierflansch
- 2.3: Anlagefläche
- 3: Kugelschale
- 3.1: polygonale Ausnehmung
- 4: Radschraube
- 5: Wälzlager
- 6: Schraube
- 6.1: Gewindebolzen
- 6.2: Schraubenkopf
- 6.3: Innensechskant
- 7: Sprengring

## Patentansprüche

1. Radaufhängung für die angetriebenen Räder eines Kraftfahrzeuges, die jeweils durch Radschrauben (4) an einer Anlagefläche (2.1) eines Bremskörpers (2) lösbar befestigt sind, der seinerseits durch mindestens ein Wälzlager (5) drehbar an einer verschwenkbar mit dem Fahrzeugrahmen oder Fahrzeugaufbau verbundenen Aufhängung gelagert und mit einer Antriebswelle verbunden ist,
**dadurch gekennzeichnet,**
**daß** das radseitige Ende der Antriebswelle über einen Wellenabschnitt (1.2) mit polygonaler Außenkontur (1.3) unmittelbar mit dem Bremskörper (2) verbunden ist und daß die Antriebswelle (1) im Anschluß an diesen polygonalen Wellenabschnitt (1.2) mit einem als Sitz für das Wälzlager (5) dienenden zylindrischen Wellenabschnitt (1.6) ausgebildet ist.

2. Radaufhängung nach Anspruch 1 für eine Einzelradaufhängung, bei der der Bremskörper (2) mittels eines aus Kugelschale (3), Kugelstern und in einem Kugelkäfig angeordneten Kugeln bestehenden Gleichlaufgelenkes mit der Antriebswelle verbunden ist, **dadurch gekennzeichnet, daß** das radseitige, als Radantriebswelle (1) ausgebildete Ende der Kugelschale (3) über einen Wellenabschnitt (1.2) mit polygonaler Außenkontur (1.3) unmittelbar mit dem Bremskörper (2) verbunden ist, wobei der als Sitz für das Wälzlager (5) dienende zylindrische Wellenabschnitt (1.6) zwischen diesem polygonalen Wellenabschnitt (1.2) und der Kugelschale (3) ausgebildet ist.

3. Radaufhängung nach Anspruch 2, **dadurch gekennzeichnet, daß** die Radantriebswelle (1) als separates Bauteil ausgeführt und über einen Endflansch (1.4) mit polygonaler Außenkontur (1.5) mit der Kugelschale (3) verbunden ist, die in ihrem Boden mit einer der polygonalen Außenkontur (1.5) des Endflansches (1.4) entsprechenden Ausnehmung (3.1) versehen ist.

4. Radaufhängung nach mindestens einem der Ansprüche 1 bis 3, **dadurch gekennzeichnet, daß** die polygonale Außenkontur (1.3, 1.5) des Wellenabschnitts (1.2) und/oder des Endflansches (1.4) in axialer Richtung konisch ausgebildet sind.

5. Radaufhängung nach einem der Ansprüche 1 bis 4, **dadurch gekennzeichnet, daß** die Antriebswelle/Radantriebswelle (1) mit einem Gewinde (1.1) für ein den Bremskörper (2) auf der Antriebswelle/Radantriebswelle (1) in axialer Richtung festlegendes Befestigungselement versehen ist.

6. Radaufhängung nach Anspruch 5, **dadurch gekennzeichnet, daß** das Gewinde als Innengewinde (1.1) für den Gewindebolzen (6.1) des als Schraube (6) ausgebildeten Befestigungselements ausgebildet ist, deren Schraubenkopf (6.2) an einer ringförmigen Anlagefläche (2.3.) des Bremskörpers (2) anliegt.

7. Radaufhängung nach Anspruch 5 oder 6, **dadurch gekennzeichnet, daß** durch das Befestigungselement zugleich der Innenring des Wälzlagers (5) zwischen dem Endflansch (1.4) der Radantriebswelle (1) und einer Anlagefläche am Bremskörper (2) eingespannt wird.

8. Radaufhängung nach Anspruch 6 oder 7, **dadurch gekennzeichnet, daß** der Schraubenkopf (6.2) mit einer innenliegenden Schlüsselfläche (6.3) versehen und mittels eines Halteelements (7) drehbar, jedoch axial im wesentlichen unverschiebbar im Bremskörper (2) gehalten ist.

9. Radaufhängung nach mindestens einem der Ansprüche 2 bis 8, **dadurch gekennzeichnet, daß** die Kugelschale (3) und der Kugelstern des Gleichlaufgelenkes mit gewölbten Kugellaufbahnen für die Kugeln ausgebildet und der Außenring des Wälzlagers (5) in einem Achsschenkel festgelegt ist, der seinerseits durch eine Lenkung verschwenkbar an einem Lenker gelagert ist.

10. Radaufhängung nach mindestens einem der Ansprüche 1 bis 9, **dadurch gekennzeichnet, daß** der Bremskörper als Bremsscheibe (2) ausgebildet ist.

11. Radaufhängung nach mindestens einem der Ansprüche 1 bis 9, **dadurch gekennzeichnet, daß** der Bremskörper als Bremstrommel ausgebildet ist.

## Claims

1. A wheel suspension assembly for driven wheels of a motor vehicle, which wheels are fastened detachably by wheel bolts (4) to a contact surface (2.1) of a brake member (2) which is mounted rotatably by at least one roller bearing (5) on a suspension connected to the frame or structure of the vehicle and is connected with a drive shaft,
**characterized in that** the end of the drive shaft on a wheel side includes a shaft section (1.2) having a polygonal outer contour (1.3) connected directly to the brake member (2), and that the drive shaft (1) further includes a cylindrical shaft section (1.6) adjoining the polygonal shaft section (1.2), the cylindrical shaft section (1.6) serving as a seat for the roller bearing (5).

2. The wheel suspension according to claim 1, for single wheel suspensions wherein the brake member is connected to the drive shaft by means of a constant-velocity joint comprising a ball cup, ball star and balls arranged in a ball cage, **characterized in that** an end of the ball cup on a wheel side is connected by the shaft section having the polygonal outer contour directly to the brake member, the seat for the roller bearing being between the polygonal shaft section and the ball cup.

3. The wheel suspension assembly according to claim 2, **characterized in that** the drive shaft is designed as a separate component and includes an end flange having a polygonal outer contour connected to the ball cup which is provided in a base with a recess corresponding to the polygonal outer contour of the end flange.

4. The wheel suspension assembly according to one of the claims 1 to 3,
**characterized in that** the polygonal outer contour of the shaft section and/or of the end flange is of conical construction in an axial direction.

5. The wheel suspension assembly according to one of the claims 1 to 4,
**characterized in that** the drive shaft is provided with a thread for a fastening member fixing the brake member on the drive shaft in an axial-direction.

6. The wheel suspension assembly according to claim 5, **characterized in that** the thread comprises an inner thread for a threaded body of the fastening member comprising a bolt, a bolt head of which rests-against an annular contact surface of the brake member.

7. The wheel suspension assembly according to claim 5 or 6, one of the claims 1 to 3 an inner ring of the roller bearing is simultaneously clamped by the fastening member between an end flange of the drive shaft and the contact surface of the brake member.

8. The wheel suspension assembly according to claim 6 or 7, **characterized in that** the bolt head is provided with an insert key surface and is held in the brake member rotatably but substantially undisplaceable axially by means of a retaining member.

9. The wheel suspension assembly according to one of the claims 2 to 8,
**characterized in that** the ball cup and the ball star of the constant-velocity joint comprise arched ball races for the balls and an outer ring of the roller bearing is fixed in a steering knuckle which is mounted on a guide rod and is pivotable by a steering mechanism.

10. The wheel suspension assembly according to one of the claims 1 to 9,
**characterized in that** the brake member comprises a brake disk.

11. The wheel suspension assembly according to one of the claims 1 to 9,
**characterized in that** the brake member comprises a brake drum.

## Revendications

1. Suspension pour les roues entraînées d'un véhicule automobile qui sont fixées de manière amovible par des vis (4) à une surface d'appui (2.1) d'un corps de frein (2) lequel est monté mobile en rotation par l'intermédiaire d'au moins un palier à roulement (5) sur une suspension reliée mobile en pivotement au bâti ou à la carrosserie du véhicule et est relié à un arbre menant,
**caractérisée en ce**
**que** l'extrémité de l'arbre moteur côté roue est directement reliée au corps de frein (2) par l'intermédiaire d'une portion d'arbre (1.2) au contour extérieur polygonal (1.3) et que l'arbre moteur (1) comporte, en prolongement de la portion d'arbre polygonale (1.2), une portion d'arbre cylindrique (1.6) servant de logement au palier à roulement (5).

2. Suspension selon la revendication 1 pour une suspension à roues indépendantes dans laquelle le corps de frein (2) est relié à l'arbre moteur au moyen d'un joint homocinétique constitué par une rotule (3), une étoile à billes et des billes disposées dans une cage à billes, **caractérisée en ce que** l'extrémité côté roue de la rotule (3), qui est conformée en forme d'arbre de roue (1), est directement reliée au corps de frein (2) par l'intermédiaire d'une portion d'arbre (1.2) au contour extérieur polygonal (1.3), la portion d'arbre cylindrique (1.6) servant de logement au palier de roulement (5) étant conformée entre la portion d'arbre polygonale (1.2) et la rotule (3).

3. Suspension selon la revendication 2, **caractérisée en ce que** l'arbre de roue (1) est réalisé sous forme de pièce distincte et est relié, par l'intermédiaire d'une collerette d'extrémité (1.4) au contour extérieur polygonal (1.5), à la rotule (3) munie dans son fond d'un évidement (3.1) conjugué du contour extérieur polygonal (1.5) de la collerette d'extrémité (1.4).

4. Suspension selon une au moins des revendications 1 à 3, **caractérisée en ce que** le contour extérieur polygonal (1.3, 1.5) de la portion d'arbre (1.2) et/ou de la collerette d'extrémité (1.4) sont de forme conique suivant la direction axiale.

5. Suspension selon l'une quelconque des revendications 1 à 4, **caractérisée en ce que** l'arbre moteur/l'arbre de roue (1) est muni d'un filetage (1.1) pour un élément de fixation assujettissant le corps de frein (2) à l'arbre moteur/l'arbre de roue (1) suivant la direction axiale.

6. Suspension selon la revendication 5, **caractérisée en ce que** le filetage est conformé en forme de taraudage (1.1) pour le boulon fileté (6.1) de l'élément de fixation conformé en forme de vis (6), la tête de vis (6.2) étant en appui sur une surface d'appui annulaire (2.3) du corps de frein (2).

7. Suspension selon la revendication 5 ou 6, **caractérisée en ce que** l'élément de fixation permet en même temps de serrer la bague intérieure du palier à roulement (5) entre la collerette d'extrémité (1.4) de l'arbre de roue (1) et une surface d'appui prévue sur le corps de frein (2).

8. Suspension selon la revendication 6 ou 7, **caractérisée en ce que** la tête de vis (6.2) a des pans creux (6.3) et est retenue mobile en rotation mais sensiblement immobile en coulissement suivant la direction axiale dans le corps de frein (2) au moyen d'un élément de retenue (7).

9. Suspension selon une au moins des revendications 2 à 8, **caractérisée en ce que** la rotule (3) et l'étoile à billes du joint homocinétique sont munies de rainures incurvées pour les billes et que la bague extérieure du palier à roulement (5) est fixé dans une fusée laquelle est montée sur une timonerie et est mobile en pivotement par l'intermédiaire d'un mécanisme de direction.

10. Suspension selon une au moins des revendications 1 à 9, **caractérisée en ce que** le corps de frein est conformé en forme de disque (2).

11. Suspension selon une au moins des revendications 1 à 9, **caractérisée en ce que** le corps de frein est conformé en forme de tambour.
